# EUROPEAN PATENT SPECIFICATION

(11) **EP 3 396 560 B1**
(45) Date of publication and mention of the grant of the patent: **31.01.2024**
(21) Application number: 16877622.7
(22) Date of filing: 13.12.2016
(51) Int. Cl.: G06F 9/52, G06F 16/2453, G06F 16/2458, G06F 9/46

(54) **DATABASE OPERATING METHOD AND DEVICE**
VERFAHREN UND VORRICHTUNG ZUM BETRIEB EINER DATENBANK
PROCÉDÉ ET DISPOSITIF D'EXPLOITATION DE BASE DE DONNÉES

(30) Priority: 21.12.2015 CN 201510960091
(43) Date of publication of application: 31.10.2018
(73) Proprietor: Alibaba Group Holding Limited, Grand Cayman (KY)
(72) Inventor: WANG, Jingyu, Hangzhou Zhejiang 311121 (CN)
(74) Representative: Barker Brettell LLP
(86) International application number: PCT/CN2016/109666
(87) International publication number: WO 2017/107811

(56) References cited:
- CN-A- 102 306 092
- CN-A- 102 662 640
- CN-A- 104 793 988
- CN-A- 104 793 988
- US-A1- 2015 339 125
- RAVI RAJWAR ET AL: "Transactional lock-free execution of lock-based programs", PROCEEDINGS OF THE TENTH SYMPOSIUM ON ARCHITECTURAL SUPPORT FOR PROGRAMMING LANGUAGES AND OPERATING SYSTEMS, ACM, SAN JOSE, CA, US, 1 October 2002 (2002-10-01), pages 5-17, XP058321374, DOI: 10.1145/605397.605399 ISBN: 978-1-58113-574-9
- GENE PANG ET AL: "PLANET : making progress with commit processing in unpredictable environments", PROCEEDINGS OF THE 2014 ACM SIGMOD INTERNATIONAL CONFERENCE ON MANAGEMENT OF DATA, SIGMOD '14, 1 January 2014 (2014-01-01), pages 3-14, XP055582470, New York, New York, USA DOI: 10.1145/2588555.2588558 ISBN: 978-1-4503-2376-5
- ANDREW PAVLO ET AL: "On Predictive Modeling for Optimizing Transaction Execution in Parallel OLTP Systems", ARXIV.ORG, CORNELL UNIVERSITY LIBRARY, 201 OLIN LIBRARY CORNELL UNIVERSITY ITHACA, NY 14853, 30 October 2011 (2011-10-30), XP080536146, DOI: 10.14778/2078324.2078325
- EVAN P C JONES ET AL: "Low overhead concurrency control for partitioned main memory databases", PROCEEDINGS OF THE 2010 INTERNATIONAL CONFERENCE ON MANAGEMENT OF DATA, SIGMOD '10, ACM PRESS, NEW YORK, NEW YORK, USA, 6 June 2010 (2010-06-06), pages 603-614, XP058087499, DOI: 10.1145/1807167.1807233 ISBN: 978-1-4503-0032-2

## Description

### Technical Field

The present invention relates to the technical field of databases, and particularly to database operating methods and apparatuses.

### Background

A database transaction refers to a series of operations executed by a single logical unit of work, which are either executed in completion or not executed at all. A single transaction is formed by a series of database operational commands, such as a statement.

In order to ensure the accuracy of reading concurrency of data, a concept of transaction isolation level is proposed for database operations. Four transaction isolation levels are defined in SQL (Structured Query Language) standard. A Read Committed is an isolation level that is preferentially considered by a number of application programs, which can avoid a dirty read and has a relatively good performance of concurrency. However, issues of non-repeatable reads can still happen.

For the issues of non-repeatable reads faced by a transaction of a Read Committed isolation level, an isolation level of certain data in the transaction of the Read Committed isolation level can be temporarily upgraded through a "for update" statement to ensure that the data can be read repeatedly. However, this will seriously affect the performance of concurrency of a system, and lead to a reduction in the efficiency of execution, having a relatively low throughput capacity of transactions.

The paper "Transactional Lock-Free Execution of Lock-Based Programs" of Ravi Rajwar et al, Proceedings of the tenth symposium on architectural support for programming languages and operating systems, ACM, San Jose, CA, US dated 1 October 2002, pages 5-17, XP058321374, describes lock removal in database operation, by using timestamps to effectively prioritise and resolve conflict between processes over access to data blocks. It also uses speculative execution as part of the conflict resolution, and stores the result of speculative execution in a cache, for writing to the database at the end of a transaction.

### Summary

A number of aspects of the present application provide a method and an apparatus of database operations, which are used for ensuring the performance of concurrency of a database system, improving the efficiency of execution of transactions, and increasing the throughput capacity of the transactions.

In one aspect of the present invention, a database operating method according to claim 1 is provided

In another aspect of the present invention, a database operating apparatus according to claim 4 is provided.

In another aspect of the present invention, one or more computer readable media according to claim 7 is provided.

In the present application, a database operating apparatus and an application server cooperate with each other. When the application server executes a target transaction, the database operating apparatus adds a process of predictive execution, obtains and records all database operational commands that need to be executed in the target transaction in advance, and record predictive execution data produced by the predictive execution for a database operational command that belongs to a modifying database type command or a locked non-modifying database type command, or only for a database operational command that belongs to a locked non-modifying database type command, in order to adapt to a locking scheme under a read committed isolation level and to provide conditions for a real execution of the transaction. The database operating apparatus then controls a database corresponding to the application server to really execute the target transaction based on the database operational command and the predictive execution data that are recorded, thus facilitating an improvement of the efficiency of execution and increasing the throughput capacity of transactions.

### Brief Description of the Drawings

In order to describe technical solutions in the embodiments of the present application in a better manner, accompanying drawings that are needed for description of the embodiments or the existing technologies are briefly described herein. Apparently, the described drawings represent some of the embodiments. Based on these drawings, one of ordinary skill in the art can obtain other drawings without making any creative effort.
FIG. 1 is a deployment diagram of a database application system in the existing technologies.
FIG. 2 is a deployment diagram of a database application system provided by an embodiment of the present application.
FIG. 3 is a flowchart of a database application method provided by another embodiment of the present application.
FIG. 4 is a flowchart of a database application method provided by still another embodiment of the present application.
FIG. 5 is a schematic structural diagram of a database application apparatus provided by still another embodiment of the present application.
FIG. 6 is a schematic structural diagram of a database application apparatus provided by still another embodiment of the present application.

### Detailed Description

In order to make the goals, the technical solutions and the advantages of the embodiments of the present application more clearly, the technical solutions in the embodiments of the present application are described in a clear and complete manner in conjunction with the accompanying drawings in the embodiments of the present application.

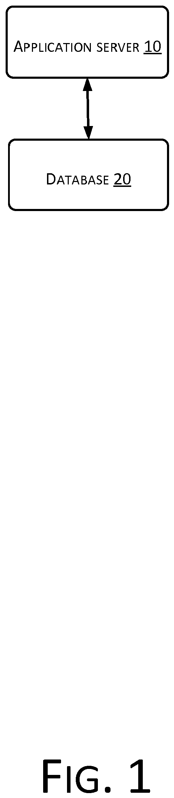

FIG. 1 is a deployment diagram of a database application system in the existing technologies. As shown in FIG. 1, the system includes an application server 10 and a database 20. There may be one or more application servers 10, and one or more databases 20. FIG. 1 only shows one application server 10 and one database 20 as an example. When an access is performed on the database 20 in a form of a transaction, the application server 10 executes the logic of the transaction, and applies database operational commands in the transaction on the database 20. Since database operational commands in a transaction that need to be executed cannot be known in advance, the efficiency of executing the transaction is thereby low. This is especially true for a scheme of locking data under an isolation level of a read committed through a "for update" statement. The efficiency of executing thereof is lower, having a relatively low throughput capacity.

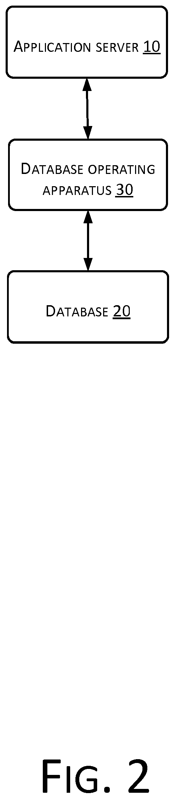

The present application provides a new database application system targeted at the deficiencies that exist in the existing technologies. As shown in FIG. 2, the system adds a database operating apparatus 30 between the application server 10 and the database 20. The database operating apparatus 30 is used for executing a database operating method provided in the present application, which implements new transaction execution logic in a locking scheme under an isolation level of a read committed. Specifically, a predictive execution is first performed for a transaction to obtain database operational commands that needs to be performed in the transaction in advance, thus achieving a prediction of an execution path. Furthermore, in conjunction with an isolation level of a read committed and a locking condition, predictive execution data that is produced by the predictive execution is recorded only for a database operational command that belongs to a modifying database type command and a locked non-modifying database type command, or only for a database operational command that belongs to a locked non-modifying database type command. A real execution of the transaction is then performed on the database 20 based on the database operational command and the predictive execution data obtained from the predictive execution, thereby facilitating an improvement in the efficiency of execution of the transaction and increasing the throughput capacity of transactions. The throughput capacity of transaction refers to the number of transactions processed within a unit time period.

It should be noted that the database operating apparatus 30 is a logical processing apparatus in reality, which can be independently deployed and located between the application server 10 and the database 20, or can be deployed in the application server 10 for implementation, or can be deployed in the database 20 for implementation.

Methodological processes of the technical solutions of the present application are described in detail with the following embodiments.

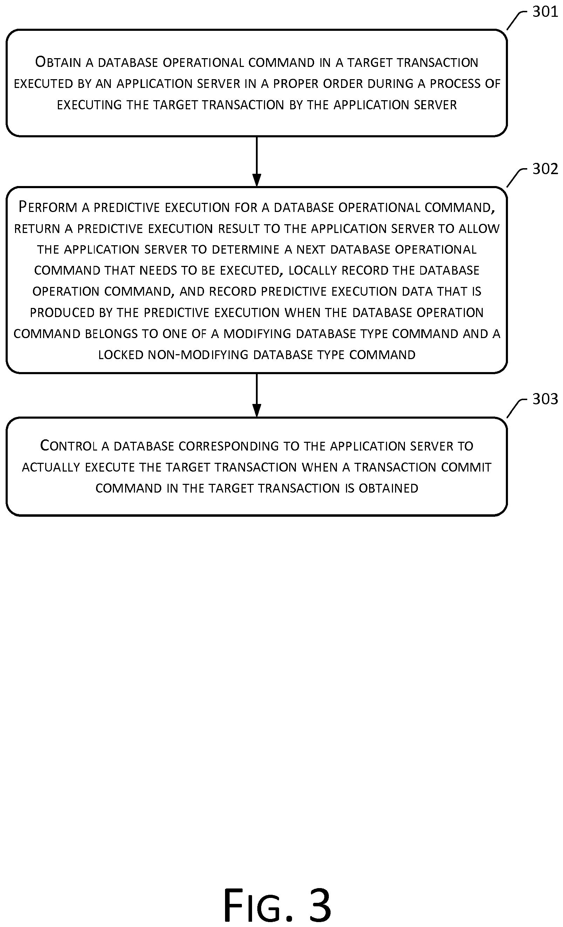

FIG. 3 is a flowchart of a database operating method provided by another embodiment of the present application. As shown in FIG. 3, the method includes:
301: Obtain database operational commands in a target transaction executed by an application server in a proper order during a process of executing the target transaction by the application server.
302: Perform a predictive execution for a database operational command, return a predictive execution result to the application server to allow the application server to determine a next database operational command that needs to be executed, locally record the database operation command, and record predictive execution data that is produced by the predictive execution when the database operation command belongs to one of a modifying database type command and a locked non-modifying database type command.
303: Control a database corresponding to the application server to actually execute the target transaction when a transaction commit command in the target transaction is obtained.

For the sake of description, it is noted that the present embodiment refers a transaction that needs to be executed by an application server as a target transaction. The target transaction mainly includes operational commands used for performing operations on a database. Other than the database operational commands, some control commands used for controlling an execution state of the target transaction, for example, a transaction start command, a transaction commit command, a transaction rollback command, etc., are also used. These commands are actually statements that are edited and written in a database language. According to different database languages, these commands can be statements edited and written in different languages. For example, if SQL is used, the above database operational commands and control commands are actually a series of SQL statements.

In addition, transaction processing needs to first select some records, and then process these records in some application scenarios. Therefore, exclusive locks are needed to place on the selected records. This means that database operational command(s) in the present embodiment may be locked database operational command(s). For example, if one hundred dollars are transferred from an account of Bob, this operation is completed in three steps: checking the account of Bob; determining whether this account has enough funds of one hundred dollars; and reducing the money in the account of Bob by one hundred dollars. If two transfer operations are executed concurrently, one hundred dollars are found when the first transfer operation checks a remaining balance of the account of Bob. If another transfer operation also checks the account of Bob at the same time, the account of Bob is also found to have one hundred dollars. Therefore, transfers are both performed by these two transfer operations, with the first operation deducting one hundred dollars from the account of Bob and the other operation also deducting one hundred dollars from the account of Bob. In this case, the remaining balance of the account of Bob may be negative. In order to avoid this type of situation, a "for update" statement is needed to place a lock on the account of Bob to ensure that the second transfer operation cannot obtain the lock and thus cannot perform a check when the first transfer operation is executing.

The method provided by the present embodiment is suitable for performing operations on a database with read committed as an isolation level. Some databases use such read committed as an isolation level by default. For example, Oracle databases use read committed as an isolation level by default. Some databases do not use such read committed as an isolation level by default. For example, MySQL databases use repeatable reads as an isolation level by default. Accordingly, prior to performing the method provided by the present embodiment, a determination may be made as to whether an isolation level of a database is read committed, and if not, the database is first needed to be configured with such isolation level of read committed. For example, before the application server executes the target transaction, the database is configured with such isolation level of read committed.

In a situation that an isolation level of the database is read committed, the method provided by the present embodiment can be performed to execute the target transaction in the database. Details of a process thereof include the following.

The application server controls the entire execution logic of a target transaction, and executes the target transaction using an existing approach. The database operating apparatus successively obtains database operational commands in the target transaction executed by the application server when the application server executes the target transaction.

In an optional implementation, the application server sends database operational commands to the database using an existing approach to achieve an access to the database. The database operating apparatus may monitor communications between the application server and the database to intercept the database operational commands sent from the application server to the database.

In another optional implementation, the processing logic of the application server is slightly modified, changing the processing logic from sending database operational commands to the database to sending thereof to the database operating apparatus. Accordingly, the database operating apparatus can receive database operational commands that are actively sent from the application server.

It is noted herein that the first command in a target transaction is a transaction start command, such as a begin transaction, if the target transaction is an explicit transaction. Accordingly, prior to obtaining the database operational commands executed by the application server, the database operating apparatus may intercept the transaction start command in the target transaction that is sent from the application server to the database, and is aware of the need for execution of the target transaction based on the transaction start command. Alternatively, prior to obtaining the database operational commands executed by the application server, the database operating apparatus may receive the transaction start command in the target transaction that is actively sent from the application server, and is aware of the need for execution of the target transaction based on the transaction start command. If the target transaction is an implicit transaction, the first command of the target transaction is a database operational command, and the procedure of obtaining a transaction start command is not included.

After obtaining the database operational commands executed by the application server, the database operating apparatus performs a predictive execution for the obtained database operational commands, and returns a predictive execution result to the application server, to allow the application server to determine a next database operational command that needs to be executed. The predictive execution result determines an execution path of the target transaction. The execution path herein refers to the jumping logic among database operational commands. By returning the predictive execution result to the application server, the goal of having the application server to control the entire execution logic of the target transaction is achieved.

Furthermore, the database operating apparatus also needs to locally record the obtained database operational commands, and records predictive execution data produced by the predictive execution of the database operational commands when the database operational command belongs to one of a modifying database type command or a locked non-modifying database type command. The modifying database type command refers to a database operational command that causes a change in the database, such as commands beginning with update, insert, etc. Generally, commands beginning with select do not belong to modifying database type commands (and are called non-modifying database type command). Although read committed isolation level only ensures that writing a plurality of pieces of data is atomic and does not place a lock when reading by nature, some non-modifying database type commands may need to place a lock through a for update statement to ensure the consistency of transactions and to reduce the probability of rollbacks. In the above example of transfer, a lock needs to be placed for a select command, to form a database operational command in a form of select ...... for update, for example. This type of command can be called as locked non-modifying database type command. The predictive execution data mainly refers to some data in a process of performing a predictive execution for a database operation command, such as data manipulated by the database operation command, and a primary key ID of data and a version corresponding to the primary key ID, etc.

It should be noted that a same database operational command belongs to a modifying database type command, a locked non-modifying database type command, or a non-locked non-modifying operational command. However, from the entire perspective of the target transaction, predictive execution data produced by predictive execution for all modifying database type commands and all locked non-modifying database type commands in the target transaction is recorded locally.

For example, the database operating apparatus may create a memory bank locally, and store the obtained database operational commands and the predictive execution data in the memory bank. Furthermore, if the predictive execution data does not include predictive execution result(s), the predictive execution result(s) can also be stored in the memory bank.

In order to implement a simulation of the locking scheme under the isolation level of read committed on a basis of such core concept of predictive execution, the present embodiment records predictive execution data produced by a predictive execution of a database operational command that belongs to one of a modifying database type command or a locked non-modifying database type command, and does not record predictive execution data corresponding to a database operational command belonging to a non-locked non-modifying database type command. As can be seen, an amount of data that is recorded is relatively small when the locking scheme under the isolation level of read committed is implemented. As such, an amount of data that needs to be processed is relatively small during a subsequent process of a real execution of the target transaction in the database based on the locally recorded database operational commands and the predictive execution data, thus facilitating further improvements in the efficiency and performance of the execution, and increasing the throughput capacity of transactions.

Operations of database operational commands for a database mainly are accessing data in the database. Therefore, a data environment in a database operational command may be simulated, and a predictive execution of the database operational command is performed based on the simulated data environment. Furthermore, considering that a database operational command that belongs to a non-modifying database type command does not cause a change in the database, a predictive execution for this database operational command can be directly performed in the database, thus saving an operation of simulating a data environment. An implementation thereof is relatively simple, thus helping to save resources and improve the efficiency of execution. However, since a database operational command that belongs to a modifying database type command will cause a change in the database (which is mainly a change in data in the database), a simulated data environment is needed, and a predictive execution is performed in the simulated data environment.

Based on the above analysis, an approach of performing a predictive execution of a database operational command may include identifying a type of a database operational command that is obtained; simulating a data environment of the database operational command in a locally created memory bank and performing a predictive execution of the database operational command based on the simulated data environment if the database operational command belongs to a modifying database type command; and executing the database operational command in the database and performing the predictive execution of the database operational command if the database operational command belongs to a non-modifying database type command.

Furthermore, an implementation of simulating the data environment of the database operational command in the locally created memory bank and performing the predictive execution of the database operational command based on the simulated data environment includes dividing the obtained database operational command into a read command and a write command; running the read command in a real database, i.e., executing the read command in the database to obtain a read dataset (ReadSet); storing the read dataset into a local memory bank to simulate a data environment that is needed by the database operational command; and applying the write command in the memory bank to implement a predictive execution of the database operational command, i.e., executing the write command in the memory bank to modify the read dataset, for example, updating or querying related data in the read dataset. A result dataset (affectRowInMemdb) may be generated by executing the write command to modify the read dataset. The result dataset includes a predictive execution result.

In the above process of predictive execution, if the database operational command belongs to a modifying database type command, the database operating apparatus may locally record the read dataset that is read by the read command and the result dataset that is generated from the execution of the write command. As can be seen, the predictive execution data can include the read dataset and the result dataset, or can include a portion of data in the read dataset and the result dataset. Examples include some data that can produce a beneficial effect on a real execution of the target transaction in the database. Examples are various indices of some data values, such as a first-level index, a second-level index, a primary key ID, a version, etc.

Preferably, in order to further reduce the amount of recorded data, only a primary key ID and a version of data that is manipulated by the database operational command are recorded as the predictive execution data when the database operational command belongs to a locked non-modifying database type command. As such, in a subsequent process of a real execution of the target transaction in the database based on the database operational commend and the predictive execution data that are locally recorded, the amount of data that needs to be processed is relatively small, thus helping to further improve the efficiency and the performance of execution, and increasing the throughput capacity of transactions. Furthermore, data may sometimes undergo a number of changes during a transaction process, and return to an initial value at the end. However, a primary ID and a version of the data does not change. Therefore, if an approach of recording data itself is used, data may not be the same when a predictive execution is compared with a real execution, leading to an occurrence of rollback. The cost of rollback is relatively large. However, the present embodiment adopts an approach of only recording a primary key ID and a version. The probability that a rollback occurs is relatively low when a predictive execution and a real execution are compared, having a low probability of rollback.

In response to obtaining a transaction commit command in the target transaction (i.e., a transaction commit command executed by the application server), the database operating apparatus controls the database corresponding to the application server to actually execute the target transaction based on the database operational command and the predictive execution data that are locally recorded.

Controlling the database corresponding to the application server to actually execute the target transaction based on the database operational command and the predictive execution data that are locally recorded includes sending the locally recorded database operational command from the database operating apparatus to the database, to instruct the database to execute the database operational command, and receiving a real execution result of the database operational command returned from the database; comparing the real execution result of the database operational command with the predictive execution result, and sending a transaction commit command to the database if the real execution result is the same as the predictive execution result; and sending a transaction rollback command to the database to allow the database to roll back the target transaction if the real execution result is different from the predictive execution result.

In the above implementation, by taking into account of the atomicity of the transaction, errors in the execution process of the transaction can be avoided by comparing the real execution result with the predictive execution result, thus helping to improve a success rate of execution of transactions.

Moreover, since all database operational commands that needs to be executed in a transaction cannot be known in advance in the existing technologies, the database operational commands can only be sequentially executed according to the execution logic of the transaction. This leads to frequent interactions between an application server and a database, and will waste a large amount of network resources in remote application scenarios. The present embodiment, however, has obtained all database operational commands that needs to be executed in a transaction, i.e., locally recorded database operational commands, in advance through a process of predictive execution. Therefore, when the locally recorded database operational commands are sent to a database to instruct the database to execute the database operational commands, the locally recorded database operational commands can be sent to the database at the same time (or in combination), thus helping to save network resources. Furthermore, the database can also perform concurrent operations for some concurrent database operational commands, thus helping to further improve the efficiency of execution of the transaction and increasing the throughput capacity of transactions.

Furthermore, all the locally recorded database operational commands and the locally recorded predictive execution data may also be sent together to the database.

Furthermore, in implementations of controlling the database corresponding to the application server to actually execute the target transaction based on the database operational command and the predictive execution data that are locally recorded, the database operating apparatus can determine whether the target transaction is a single-machine transaction based on the locally recorded database operational commands. If a determination result is positive, the database is controlled to perform the real execution of the target transaction using a single-machine transaction processing logic. If the determination result is negative, the database is controlled to perform the real execution of the target transaction using a distributed machine transaction processing logic.

Identification can be made as to whether the target transaction is a single-machine transaction or a distributed transaction based on the database operational command obtained in the process of predictive execution. For example, a determination may be made as to whether objects of operation of the locally recorded database operational commands are applied in a same physical device. If a determination result is positive, a determination can be made that the target transaction is a single-machine transaction. If the determination result is negative, a determination can be made that the target transaction is a distributed transaction.

The processing logic of a distributed transaction and the processing logic of a single-machine transaction are different. The processing logic of the single-machine transaction is relatively simple (e.g., problems such as placing a lock for read and write are not involved), and so resources that are consumed thereby are relatively fewer. Accordingly, by identifying whether the target transaction is a single-machine transaction, the present embodiment performs processing using the single-machine transaction processing logic when the target transaction is identified as the single-machine transaction, rather than universally performing processing using the distributed processing logic, thus helping to improve the processing efficiency and saving the processing cost.

In an optional implementation, if a transaction rollback command in the target transaction is obtained, the database operating apparatus may delete the database operational commands and the predictive execution data that are locally recorded. For example, the local memory bank is cleared directly, thus implementing a rollback operation. In this situation, since the target transaction was not really executed in the database, the database does not need to perform a rollback operation. As can be seen, in this type of transaction rollback situation, the execution efficiency of transactions can also be improved by using the method of the present embodiment.

As can be seen from the above, in the method provided by the present embodiment, the database operating apparatus and the application server cooperate with each other. When the application server executes a target transaction, the database operating apparatus adds a process of predictive execution, and can obtain an execution path of the target transaction in advance in the process of predictive execution, i.e., database operational commands that really need to be executed. Furthermore, predictive execution data produced by the predictive execution is recorded only for a database operational command that belongs to a modifying database type command, or only for a database operational command that belongs to a locked non-modifying database type command, in order to adapt to a locking scheme under a read committed isolation level and to provide conditions for a real execution of the transaction. When the target transaction is really executed based on the database operational command and the predictive execution data that are recorded, related data information can be obtained in advance based on the predictive execution data, and jumps between commands can be reduced, thus improving the efficiency of execution and increasing the throughput capacity of transactions.

A transaction of reducing an inventory is used as an example herein to describe a work process of the technical solutions of the present application in detail. An isolation level of a database is an isolation level of a read committed.

A SQL code for reducing an inventory is given as follows, with a text included in parenthesis as a note.

```
       begin transaction (start a transaction)
       select * from inventory where itemld = ? for update (check the current inventory using a
       product id, and an attention is paid here about
using for update for a placement of a lock for
       display externally)
       if (item.inventory > 0)
       item.inventory --;
       update inventory set item-inventory = $item.inventory where itemld = ?
       commit;
       else
       rollback; (if the current inventory is greater
than zero, a reduction is made, the product
       inventory is updated, and a commitment is made. Otherwise, a rollback is performed)
```

In a real execution process, an application server is responsible for the entire logic of such transaction of reducing the inventory, and a database operating apparatus (which may alternatively be called an execution server) is only responsible for obtaining a starting transaction that is executed by the application server, SQL statement(s) that need(s) to be executed, and a commit/rollback command.

First, after a transaction is started, the database operating apparatus creates a memory bank locally.

Upon obtaining the SQL statement of "select * from inventory where itemId = ? for update", the database operating apparatus recognizes that this SQL statement does not make a change to a database, and thus applies this SQL statement directly on a real database, i.e., executing the SQL statement in the database to obtain a query result (i.e., a read dataset). The database operating apparatus returns the entire query result to the application server to allow the application server to determine a next SQL statement that needs to be executed, and locally records this SQL statement in the memory bank. Since this statement is placed with a lock, data related to the execution of this statement needs to be recorded, even in a read committed isolation level. In implementations, only a primary key ID and a version of data queried by this SQL statement may be recorded.

Upon receiving the query result returned by the database operating apparatus, the application server determines whether the current inventory is greater than zero. If a determination result is positive, the current inventory is reduced, and the update statement, i.e., "update inventory set item-inventory = $item.inventory where itemld = ?", is executed. If the determination result is negative, the rollback statement is executed.

In a first type of situation, the application server is asumed to execute the rollback statement, and the database operating apparatus will receive the rollback statement. In response to obtaining the rollback statement, the database operating apparatus clears a local memory bank, which mainly refers to clearing up the previously recorded SQL statement "select * from inventory where itemld = ? for update". In this type of situation, the database does not need to perform a rollback operation because the transaction was not executed in the database.

In a second type of situation, the application server is assumed to execute the statement of "update inventory set item-inventory = $item.inventory where itemld = ?". When receiving this statement of "update inventory set item-inventory = $item.inventory where itemld = ?", the database operating apparatus identifies that this SQL statement will make a change to the database, and therefore divides this SQL statement into a read command (i.e., "select * from inventory where itemld = ?") and a write command (i.e., "update inventory set item-inventory = $item.inventory where itemld = ?"). The database operating apparatus then sends the statement of "select * from inventory where itemld = ?" to the database, obtains a read dataset, and writes data in the read dataset into the local memory bank, wherein the read dataset includes a primary key list (itemld) and a version corresponding to the primary key. An update operation is then performed in the local memory bank based on the statement of "update inventory set item-inventory = $item.inventory where itemld = ?" to obtain a result dataset, and the result dataset is returned to the application server. The result dataset may be modification record information, something similar to the number of a few records that were modified. For example, affectRow=1 represents that one record is modified. Alternatively, the result dataset may also be modification detailed information that records detailed information of modification. The result dataset and the read dataset form predictive execution data.

The application server executes the commit command at this time.

Upon obtaining the commit command, the database operating apparatus executes the transaction of reducing the inventory in the database based on the SQL statements and the predictive execution data in the local memory bank. The transaction execution process at this time is a real execution. For example, the SQL statements and the predictive execution data that are locally recorded are shown as follows.

```
       {
               select * from inventory where itemld = ?
               update inventory set item-inventory = $item.inventory where itemld = ?
 [readVersion : itemld = xxx and version = xxx / affectRow = 1]
       commit()
       }
```

Preferably, the database operating apparatus can provide all the SQL statements in the local memory bank to the database at one time, and the database performs execution based thereon. This helps saving network resources that are consumed by transmitting the SQL statements.

The real execution of this time also returns an execution result. The predictive execution result can be compared with a real execution result. For example, primary key IDs and versions in these two results can be compared first, and affectRow in the two results are then compared. If a comparison result indicates a difference, commit is considered to be a failure. Since the transaction is not really executed and committed in the database at all in this type of situation, the entire request can be rolled back in a simple manner, to allow the application server to perform a re-submission.

Through the above predictive execution, all SQL statements that need to be executed, and corresponding predictive execution data, such as all segmentation conditions, indices of values, versions, etc., have been obtained. These pieces of data are enough for determining whether the transaction is a single-machine transaction in advance. Accordingly, a corresponding transaction processing logic can be used for processing, thus helping to save resources.

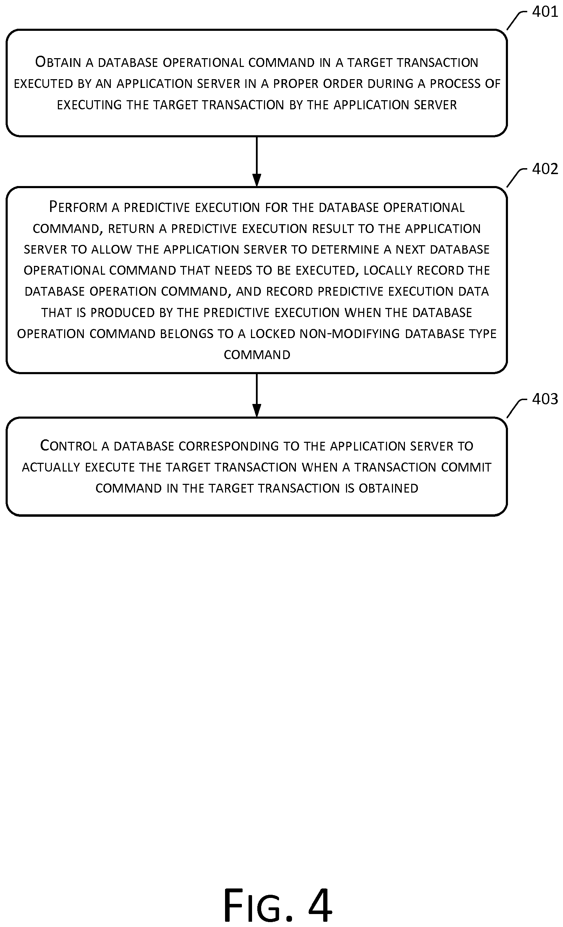

FIG. 4 is a flowchart of a database operating method provided by another embodiment of the present application. As shown in FIG. 4, the method includes:
401: Obtain a database operational command in a target transaction executed by an application server in a proper order during a process of executing the target transaction by the application server.
402: Perform a predictive execution for the database operational command, return a predictive execution result to the application server to allow the application server to determine a next database operational command that needs to be executed, locally record the database operation command, and record predictive execution data that is produced by the predictive execution when the database operation command belongs to a locked non-modifying database type command.
403: Control a database corresponding to the application server to actually execute the target transaction when a transaction commit command in the target transaction is obtained.

The present embodiment is similar to the embodiment shown in FIG. 3. Differences therebetween include recording predictive execution data that is produced by a predictive execution of a locked non-modifying database type command in a target transaction only, without recording predictive execution data that is produced by a predictive execution of a modifying database type command and predictive execution data that is produced by a predictive execution of a locked non-modifying database type command. Furthermore, the present embodiment is suitable for a target transaction that includes locked non-modifying database type command(s).

Considering that some databases use read committed as the isolation level by default (such as Oracle databases use read committed as the isolation level by default) and some databases do not use read committed as the isolation level by default (e.g., MsSQL databases uses repeatable reads as the isolation level), a determination may be made whether an isolation level of a database is read committed prior to performing the method provided in the present embodiment. If not, the database needs to be configured to have read committed as the isolation level first. For example, the database may be configured with read committed as the isolation level before the application server executes a target transaction.

In an optional implementation, the application server sends a database operational command to the database using an existing approach to achieve an access to the database. The database operating apparatus may monitor communications between the application server and the database to intercept the database operational command sent from the application server to the database.

In another implementation, the processing logic of the application server is slightly modified, changing the processing logic from sending database operational commands to the database to sending thereof to the database operating apparatus. Accordingly, the database operating apparatus can receive database operational commands that are actively sent from the application server.

It is noted herein that the first command in a target transaction is a transaction start command, such as a begin transaction, if the target transaction is an explicit transaction. Accordingly, prior to obtaining the database operational commands executed by the application server, the database operating apparatus may intercept the transaction start command in the target transaction that is sent from the application server to the database, and is aware of the need for execution of the target transaction based on the transaction start command. Alternatively, prior to obtaining the database operational commands executed by the application server, the database operating apparatus may receive the transaction start command in the target transaction that is actively sent from the application server, and is aware of the need for execution of the target transaction based on the transaction start command. If the target transaction is an implicit transaction, the first command of the target transaction is a database operational command, and the procedure of obtaining a transaction start command is not included.

After obtaining the database operational commands executed by the application server, the database operating apparatus performs a predictive execution for the obtained database operational commands, and returns a predictive execution result to the application server, to allow the application server to determine a next database operational command that needs to be executed. The predictive execution result determines an execution path of the target transaction. The execution path herein refers to the jumping logic among database operational commands. By returning the predictive execution result to the application server, the goal of having the application server to control the entire execution logic of the target transaction is achieved.

Furthermore, the database operating apparatus also needs to locally record the obtained database operational commands, and records predictive execution data produced by the predictive execution of the database operational commands when the database operational command belongs a locked non-modifying database type command. A modifying database type command refers to a database operational command that causes a change in the database, such as commands beginning with update, insert, etc. Generally, commands beginning with select do not belong to modifying database type commands (and are called non-modifying database type command). Sometimes, some non-modifying database type commands may need to place a lock through a for update statement to ensure the consistency of transactions and to reduce the probability of rollbacks. In the above example of transfer, a lock needs to be placed for a select command, to form a database operational command in a form of select ...... for update, for example. This type of command can be called as locked non-modifying database type command. The predictive execution data mainly refers to some data in a process of performing a predictive execution for a database operation command, such as data manipulated by the database operation command, and a primary key ID of data and a version corresponding to the primary key ID.

It should be noted that a same database operational command belongs to a modifying database type command, a locked non-modifying database type command, or a non-locked non-modifying operational command. In the present embodiment, predictive execution data produced by predictive execution for all locked non-modifying database type commands in the target transaction is recorded locally.

For example, the database operating apparatus may create a memory bank locally, and store the obtained database operational commands and the predictive execution data in the memory bank. Furthermore, if the predictive execution data does not include predictive execution result(s), the predictive execution result(s) can also be stored in the memory bank.

In order to implement a simulation of the locking scheme on a basis of such core concept of predictive execution, the present embodiment records predictive execution data produced by a predictive execution of a database operational command that belongs to a locked non-modifying database type command, and does not record predictive execution data corresponding to other database type commands. As can be seen, an amount of data that is recorded is relatively small when the locking scheme under is implemented. As such, an amount of data that needs to be processed is relatively small during a subsequent process of a real execution of the target transaction in the database based on the locally recorded database operational commands and the predictive execution data, thus facilitating further improvements in the efficiency and performance of the execution, and increasing the throughput capacity of transactions.

Preferably, only a primary key ID and a version of data that is manipulated by the database operational command are recorded as the predictive execution data when the database operational command belongs to a locked non-modifying database type command. As such, in a subsequent process of a real execution of the target transaction in the database based on the database operational commend and the predictive execution data that are locally recorded, the amount of data that needs to be processed is relatively small, thus helping to further improve the efficiency and the performance of execution, and increasing the throughput capacity of transactions. Furthermore, data may sometimes undergo a number of changes during a transaction process, and return to an initial value at the end. However, a primary ID and a version of the data does not change. Therefore, if an approach of recording data itself is used, data may not be the same when a predictive execution is compared with a real execution, leading to an occurrence of rollback. The cost of rollback is relatively large. However, the present embodiment adopts an approach of only recording a primary key ID and a version. The probability that a rollback occurs is relatively low when a predictive execution and a real execution are compared, having a low probability of rollback.

Operations of database operational commands for a database mainly are accessing data in the database. Therefore, a data environment in a database operational command may be simulated, and a predictive execution of the database operational command is performed based on the simulated data environment. Furthermore, considering that a database operational command that belongs to a non-modifying database type command does not cause a change in the database, a predictive execution for this database operational command can be directly performed in the database, thus saving an operation of simulating a data environment. An implementation thereof is relatively simple, thus helping to save resources and improve the efficiency of execution. However, since a database operational command that belongs to a modifying database type command will cause a change in the database (which is mainly a change in data in the database), a simulated data environment is needed, and a predictive execution is performed in the simulated data environment.

Based on the above analysis, an approach of performing a predictive execution of a database operational command may include identifying a type of a database operational command that is obtained; simulating a data environment of the database operational command in a locally created memory bank and performing a predictive execution of the database operational command based on the simulated data environment if the database operational command belongs to a modifying database type command; and executing the database operational command in the database and performing the predictive execution of the database operational command if the database operational command belongs to a non-modifying database type command.

Furthermore, an implementation of simulating the data environment of the database operational command in the locally created memory bank and performing the predictive execution of the database operational command based on the simulated data environment includes dividing the obtained database operational command into a read command and a write command; running the read command in a real database, i.e., executing the read command in the database to obtain a read dataset (ReadSet); storing the read dataset into a local memory bank to simulate a data environment that is needed by the database operational command; and applying the write command in the memory bank to implement a predictive execution of the database operational command, i.e., executing the write command in the memory bank to modify the read dataset, for example, updating or querying related data in the read dataset. A result dataset (affectRowInMemdb) may be generated by executing the write command to modify the read dataset. The result dataset includes a predictive execution result.

In response to obtaining a transaction commit command in the target transaction (i.e., a transaction commit command executed by the application server), the database operating apparatus controls the database corresponding to the application server to actually execute the target transaction based on the database operational command and the predictive execution data that are locally recorded.

Controlling the database corresponding to the application server to actually execute the target transaction based on the database operational command and the predictive execution data that are locally recorded includes sending the locally recorded database operational command from the database operating apparatus to the database, to instruct the database to execute the database operational command, and receiving a real execution result of the database operational command returned from the database; comparing the real execution result of the database operational command with the predictive execution result, and sending a transaction commit command to the database if the real execution result is the same as the predictive execution result; and sending a transaction rollback command to the database to allow the database to roll back the target transaction if the real execution result is different from the predictive execution result.

In the above implementation, by taking into account of the atomicity of the transaction, errors in the execution process of the transaction can be avoided by comparing the real execution result with the predictive execution result, thus helping to improve a success rate of execution of transactions.

Moreover, since all database operational commands that needs to be executed in a transaction cannot be known in advance in the existing technologies, the database operational commands can only be sequentially executed according to the execution logic of the transaction. This leads to frequent interactions between an application server and a database, and will waste a large amount of network resources in remote application scenarios. The present embodiment, however, has obtained all database operational commands that needs to be executed in a transaction, i.e., locally recorded database operational commands, in advance through a process of predictive execution. Therefore, when the locally recorded database operational commands are sent to a database to instruct the database to execute the database operational commands, the locally recorded database operational commands can be sent to the database at the same time (or in combination), thus helping to save network resources. Furthermore, the database can also perform concurrent operations for some concurrent database operational commands, thus helping to further improve the efficiency of execution of the transaction and increasing the throughput capacity of transactions.

Furthermore, all the locally recorded database operational commands and the locally recorded predictive execution data may also be sent together to the database.

Furthermore, in implementations of controlling the database corresponding to the application server to actually execute the target transaction based on the database operational command and the predictive execution data that are locally recorded, the database operating apparatus can determine whether the target transaction is a single-machine transaction based on the locally recorded database operational commands. If a determination result is positive, the database is controlled to perform the real execution of the target transaction using a single-machine transaction processing logic. If the determination result is negative, the database is controlled to perform the real execution of the target transaction using a distributed machine transaction processing logic.

Identification can be made as to whether the target transaction is a single-machine transaction or a distributed transaction based on the database operational command obtained in the process of predictive execution. For example, a determination may be made as to whether objects of operation of the locally recorded database operational commands are applied in a same physical device. If a determination result is positive, a determination can be made that the target transaction is a single-machine transaction. If the determination result is negative, a determination can be made that the target transaction is a distributed transaction.

The processing logic of a distributed transaction and the processing logic of a single-machine transaction are different. The processing logic of the single-machine transaction is relatively simple (e.g., problems such as placing a lock for read and write are not involved), and so resources that are consumed thereby are relatively fewer. Accordingly, by identifying whether the target transaction is a single-machine transaction, the present embodiment performs processing using the single-machine transaction processing logic when the target transaction is identified as the single-machine transaction, rather than universally performing processing using the distributed processing logic, thus helping to improve the processing efficiency and saving the processing cost.

In an optional implementation, if a transaction rollback command in the target transaction is obtained, the database operating apparatus may delete the database operational commands and the predictive execution data that are locally recorded. For example, the local memory bank is cleared directly, thus implementing a rollback operation. In this situation, since the target transaction was not really executed in the database, the database does not need to perform a rollback operation. As can be seen, in this type of transaction rollback situation, the execution efficiency of transactions can also be improved by using the method of the present embodiment.

As can be seen from the above, in the method provided by the present embodiment, the database operating apparatus and the application server cooperate with each other. When the application server executes a target transaction, the database operating apparatus adds a process of predictive execution, and can obtain an execution path of the target transaction in advance in the process of predictive execution, i.e., database operational commands that really need to be executed. Furthermore, predictive execution data produced by the predictive execution is recorded for a database operational command that belongs to a locked non-modifying database type command only, in order to adapt to a locking scheme under a read committed isolation level and to provide conditions for a real execution of the transaction. When the target transaction is really executed based on the database operational command and the predictive execution data that are recorded, related data information can be obtained in advance based on the predictive execution data, and jumps between commands can be reduced, thus improving the efficiency of execution and increasing the throughput capacity of transactions.

It should be noted that the foregoing method embodiments are expressed as a series of combination of actions for the sake of description. However, one skilled in the art should understand that the present application is not limited to the described order of actions, because certain operations can be performed in other orders or in parallel according to the present application. Moreover, one skilled in the art should also understand that the embodiments described in the present application belong to preferred embodiments. Actions and modules involved therein may not be essential to the present application and the invention is defined by the appended claims.

In the above embodiments, descriptions of the various embodiments have different foci. A portion that is not described in detail in a certain embodiment can be referenced to related description of other embodiments.

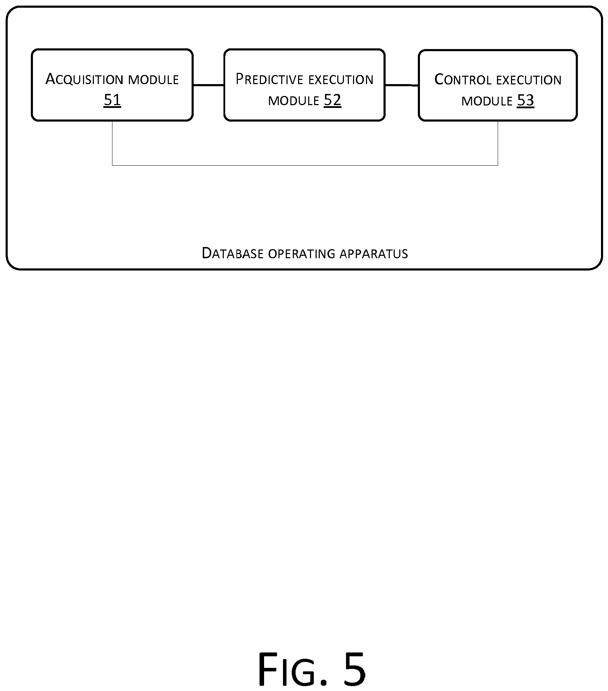

FIG. 5 is a schematic structural diagram of a database operating apparatus provided by another embodiment of the present application. As shown in FIG. 5, the apparatus includes an acquisition module 51, a predictive execution module 52, and a control execution module 53.

The acquisition module 51 is used for sequentially obtaining a database operational command in a target transaction executed by an application server when the application server executes the target transaction.

The prediction execution module 52 is used for performing a predictive execution for the database operational command, returning a predictive execution result to the application server to allow the application server to determine a next database operational command that needs to be executed, locally recording the database operational command, and recording predictive execution data produced by the predictive execution if the database operational command belongs to one of a modifying database type command or a locked non-modifying database type command.

The control execution module 53 is used for controlling a database corresponding to the application server to execute the target transaction actually based on the locally recorded database operational command and the predictive execution data in response to obtaining a transaction commit command in the target transaction.

In an optional implementation, in a process of recording the predictive execution data produced by the predictive execution when the database operational command belongs to one of the modifying database type command or the locked non-modifying database type command, the predictive execution module 52 is used for recording only a primary key ID and a version of data that is manipulated by the database operational command as the predictive execution data when the database operational command belongs to the locked non-modifying database type command.

In an optional implementation, the apparatus may further include a configuration module used for configuring the database as an isolation level of read committed before the target transaction is executed by the application server.

In an optional implementation, the predictive execution module 52 is further used for simulating a data environment of the database operational command in a locally created memory bank and performing the predictive execution of the database operational command based on the simulated data environment if the database operational command belongs to the modifying database type command; and executing the database operational command in the database to perform the predictive execution of the database operational command if the database operational command belongs to the non-modifying database type command.

Furthermore, in a process of simulating the data environment of the database operational command in the locally created memory bank and performing the predictive execution of the database operational command based on the simulated data environment when the database operational command belongs to the modifying database type command, the predictive execution module 52 is further used for dividing the database operational command into a read command and a write command; running the read command in the database to obtain a read dataset, and storing the read dataset into a local memory bank to simulate a data environment of the database operational command; and executing the write command in the memory bank to modify the read dataset.

In an optional implementation, the control execution module 53 may further be used for sending the locally recorded database operational command to the database, to instruct the database to execute the database operational command, and receiving a real execution result of the database operational command returned from the database; sending a transaction commit command to the database to allow the database to commit the target transaction if the real execution result is identical to the predictive execution result; and sending a transaction rollback command to the database to allow the database to roll back the target transaction if the real execution result is different from the predictive execution result.

The database operating apparatus provided by the present embodiment cooperates with an application server. When the application server executes a target transaction, the database operating apparatus adds a process of predictive execution, obtains and records all database operational commands that need to be executed in the target transaction in advance, and record predictive execution data produced by the predictive execution for a database operational command that belongs to a modifying database type command or a locked non-modifying database type command, or only for a database operational command that belongs to a locked non-modifying database type command, in order to adapt to a locking scheme under a read committed isolation level and to provide conditions for a real execution of the transaction. The database operating apparatus then controls a database corresponding to the application server to really execute the target transaction based on the database operational command and the predictive execution data that are recorded, thus facilitating an improvement of the efficiency of execution and increasing the throughput capacity of transactions.

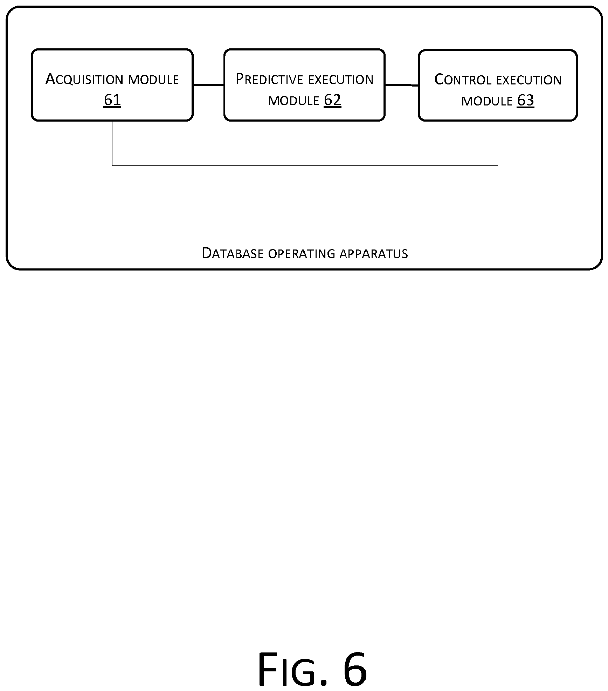

FIG. 6 is a schematic structural diagram of a database operating apparatus provided by another embodiment of the present application. As shown in FIG. 6, the apparatus includes an acquisition module 61, a predictive execution module 62, and a control execution module 63.

The acquisition module 61 is used for sequentially obtaining a database operational command in a target transaction executed by an application server when the application server executes the target transaction.

The prediction execution module 62 is used for performing a predictive execution for the database operational command, returning a predictive execution result to the application server to allow the application server to determine a next database operational command that needs to be executed, locally recording the database operational command, and recording predictive execution data produced by the predictive execution if the database operational command belongs to a locked non-modifying database type command.

The control execution module 63 is used for controlling a database corresponding to the application server to execute the target transaction actually based on the locally recorded database operational command and the predictive execution data in response to obtaining a transaction commit command in the target transaction.

In an optional implementation, the predictive execution module 62 is further used for recording only a primary key ID and a version of data that is manipulated by the database operational command as the predictive execution data when the database operational command belongs to the locked non-modifying database type command.

In an optional implementation, the apparatus may further include a configuration module used for configuring the database as an isolation level of read committed before the target transaction is executed by the application server.

In an optional implementation, the predictive execution module 62 is further used for simulating a data environment of the database operational command in a locally created memory bank and performing the predictive execution of the database operational command based on the simulated data environment if the database operational command belongs to a modifying database type command; and executing the database operational command in the database to perform the predictive execution of the database operational command if the database operational command belongs to the non-modifying database type command.

Furthermore, in a process of simulating the data environment of the database operational command in the locally created memory bank and performing the predictive execution of the database operational command based on the simulated data environment when the database operational command belongs to the modifying database type command, the predictive execution module 62 is further used for dividing the database operational command into a read command and a write command; running the read command in the database to obtain a read dataset, and storing the read dataset into a local memory bank to simulate a data environment of the database operational command; and executing the write command in the memory bank to modify the read dataset.

In an optional implementation, the control execution module 63 may further be used for sending the locally recorded database operational command to the database, to instruct the database to execute the database operational command, and receiving a real execution result of the database operational command returned from the database; sending a transaction commit command to the database to allow the database to commit the target transaction if the real execution result is identical to the predictive execution result; and sending a transaction rollback command to the database to allow the database to roll back the target transaction if the real execution result is different from the predictive execution result.

The database operating apparatus provided by the present embodiment cooperates with an application server. When the application server executes a target transaction, the database operating apparatus adds a process of predictive execution, obtains and records all database operational commands that need to be executed in the target transaction in advance, and record predictive execution data produced by the predictive execution only for a database operational command that belongs to a locked non-modifying database type command, in order to adapt to a locking scheme and to provide conditions for a real execution of the transaction. The database operating apparatus then controls a database corresponding to the application server to really execute the target transaction based on the database operational command and the predictive execution data that are recorded, thus facilitating an improvement of the efficiency of execution and increasing the throughput capacity of transactions.

One skilled in the art can clearly understand that details of work processes of the above described systems, apparatuses and units can be referenced to corresponding processes in the foregoing method embodiments, and are not repeatedly described herein for the convenience and simplicity of description.

Furthermore, various functional units in the embodiments of the present application may be integrated into a single processing unit. Alternatively, the various units may exist as independent physical entities. Alternatively, two or more two units may be integrated into a single unit. The above integrated unit may be implemented in a form of hardware, or may be implemented in a form of hardware and software functional unit(s).

An integrated unit that is implemented in a form of the above software functional unit may be stored in a computer readable storage media. The software functional unit is stored in a storage media, including instructions used for causing a computing device (which may be a personal computer, a server, or a network device, etc.) or a processor to perform some operations of the methods of the embodiments of the present application. The storage media includes various media that can store program codes, such as a flask drive, a movable hard disk, a read-only memory (ROM), a random access memory (RAM), a magnetic disk, or an optical drive.

## Claims

1. A database operating method implemented in a database operating apparatus (30) comprising:
sequentially obtaining database operational commands in a target transaction executed by an application server (10) as the application server executes the target transaction, wherein the database operational commands are directed to a database system (20) operating in read committed isolation level;
in response to obtaining a non-modifying and non-locking database type command, executing the command in the database system and returning the execution result to the application server to allow the application server to determine a next database operational command that needs to be executed in the target transaction;
in response to obtaining a locking non-modifying database type command, executing the obtained database operational command in the database system, storing the obtained database operational command and the execution result in a local memory, and sending the execution result to the application server to allow the application server to determine a next database operational command that needs to be executed in the target transaction;
in response to obtaining a modifying database type command, dividing the obtained database operational command into a read command and a write command, executing the read command in the database system to obtain a dataset, storing the dataset into the local memory, applying the write command in the local memory to modify the read dataset, returning the modified dataset to the application server to allow the application server to determine a next database operational command that needs to be executed in the target transaction;
in response to obtaining a transaction commit command, sending the locally recorded database operational commands for execution in the database system;
if the received execution result is identical to the locally recorded execution result, sending the transaction commit command to the database system to allow the database to commit the target transaction; and
if the received execution result is different from the locally recorded execution result, rolling back the target transaction and sending a transaction rollback command to the database system.

2. The method of claim 1, wherein storing the execution result in response to obtaining a locking non-modifying database type command comprises recording only a primary key ID and a version of data that is manipulated by the database operational command as the execution result.

3. The method of claim 1 or claim 2, further comprising configuring the database in the read committed isolation level before the target transaction is executed by the application server.

4. A database operating apparatus (30) comprising:
an acquisition module (51, 61) configured to sequentially obtain database operational commands in a target transaction executed by an application server (10) as the application server executes the target transaction, wherein the database operational commands are directed to a database system (20) operating in read committed isolation level;
an execution module (52, 62) configured to:
in response to the acquisition module obtaining a non-modifying and non-locking database type command, execute the command in the database system and return the execution result to the application server to allow the application server to determine a next database operational command that needs to be executed in the target transaction;
in response to the acquisition module obtaining a locking non-modifying database type command, execute the obtained database operational command in the database system, store the obtained database operational command and the execution result in a local memory, and send the execution result to the application server to allow the application server to determine a next database operational command that needs to be executed in the target transaction;
in response to the acquisition module obtaining a modifying database type command, divide the obtained database operational command into a read command and a write command, execute the read command in the database system to obtain a dataset, store the dataset into the local memory, apply the write command in the local memory to modify the read dataset, return the modified dataset to the application server to allow the application server to determine a next database operational command that needs to be executed in the target transaction;
and
a control execution module (53, 63) configured to:
in response to obtaining a transaction commit command send the locally recorded database operational commands for execution in the database system;
if the received execution result is identical to the locally recorded execution result, send the transaction commit command to the database system to allow the database to commit the target transaction; and
if the received execution result is different from the locally recorded execution result, roll back the target transaction and send a transaction rollback command to the database system.

5. The apparatus of claim 4, wherein the execution module (52, 62) is configured to store only a primary key ID and a version of data that is manipulated by the database operational command as the execution result when the database operational command is a locking non-modifying database type command.

6. The apparatus of claim 4 or claim 5, further comprising a configuration module configured to configure the database in the read committed isolation level before the target transaction is executed by the application server.

7. One or more computer readable media storing executable instructions that, when executed by one or more processors of a database operating apparatus (30), cause the one or more processors to perform acts comprising:
sequentially obtaining database operational commands in a target transaction executed by an application server (10) as the application server executes the target transaction, wherein the database operational commands are directed to a database system (20) operating in read committed isolation level;
in response to obtaining a non-modifying and non-locking database type command, executing the command in the database system and returning the execution result to the application server to allow the application server to determine a next database operational command that needs to be executed in the target transaction;
in response to obtaining a locking non-modifying database type command, executing the obtained database operational command in the database system, storing the obtained database operational command and the execution result in a local memory, and sending the execution result to the application server to allow the application server to determine a next database operational command that needs to be executed in the target transaction;
in response to obtaining a modifying database type command, dividing the obtained database operational command into a read command and a write command, executing the read command in the database system to obtain a dataset, storing the dataset into the local memory, applying the write command in the local memory to modify the read dataset, returning the modified dataset to the application server to allow the application server to determine a next database operational command that needs to be executed in the target transaction;
in response to obtaining a transaction commit command, sending the locally recorded database operational commands for execution in the database system;
if the received execution result is identical to the locally recorded execution result, sending the transaction commit command to the database system to allow the database to commit the target transaction; and
if the received execution result is different from the locally recorded execution result, rolling back the target transaction and sending a transaction rollback command to the database system.

## Patentansprüche

1. Datenbankbetriebsverfahren, das in einer Datenbankbetriebseinrichtung (30) implementiert ist, umfassend:
sequenzielles Erhalten von Datenbankbetriebsbefehlen in einer Zieltransaktion, die von einem Anwendungsserver (10) ausgeführt wird
wenn der Anwendungsserver die Zieltransaktion ausführt, wobei die Datenbankbetriebsbefehle an ein Datenbanksystem (20) gerichtet sind, das auf "Read Committed"-Isolationsebene betrieben wird;
in Reaktion auf das Erhalten eines nicht-modifizierenden und nicht-sperrenden Datenbanktypbefehls, Ausführen des Befehls in dem Datenbanksystem und Rückgabe des Ausführungsergebnisses an den Anwendungsserver, um es dem Anwendungsserver zu erlauben, einen nächsten Datenbankbetriebsbefehl zu bestimmen, der in der Zieltransaktion ausgeführt werden muss;
in Reaktion auf das Erhalten eines sperrenden nicht-modifizierenden Datenbanktypbefehls, Ausführen des erhaltenen Datenbankbetriebsbefehls in dem Datenbanksystem, Speichern des erhaltenen Datenbankbetriebsbefehls und des Ausführungsergebnisses in einem lokalen Speicher und Senden des Ausführungsergebnisses an den Anwendungsserver, um es dem Anwendungsserver zu erlauben, einen nächsten Datenbankbetriebsbefehl zu bestimmen, der in der Zieltransaktion ausgeführt werden muss;
in Reaktion auf das Erhalten eines modifizierenden Datenbanktypbefehls, Aufteilen des erhaltenen Datenbankbetriebsbefehls in einen Lesebefehl und einen Schreibbefehl, Ausführen des Lesebefehls in dem Datenbanksystem, um einen Datensatz zu erhalten, Speichern des Datensatzes in dem lokalen Speicher, Anwenden des Schreibbefehls in dem lokalen Speicher, um den gelesenen Datensatz zu modifizieren, Rückgabe des modifizierten Datensatzes an den Anwendungsserver, um es dem Anwendungsserver zu erlauben, einen nächsten Datenbankbetriebsbefehl zu bestimmen, der in der Zieltransaktion ausgeführt werden muss;
in Reaktion auf das Erhalten eines Transaktionsübergabebefehls, Senden der lokal aufgezeichneten Datenbankbetriebsbefehle zur Ausführung in dem Datenbanksystem;
falls das empfangene Ausführungsergebnis mit dem lokal aufgezeichneten Ausführungsergebnis identisch ist, Senden des Transaktionsübergabebefehls an das Datenbanksystem, um es der Datenbank zu erlauben, die Zieltransaktion zu übergeben; und
falls das empfangene Ausführungsergebnis von dem lokal aufgezeichneten Ausführungsergebnis verschieden ist, Rücksetzen der Zieltransaktion und Senden eines Transaktionsrücksetzbefehls an das Datenbanksystem.

2. Verfahren nach Anspruch 1, wobei das Speichern des Ausführungsergebnisses in Reaktion auf das Erhalten eines sperrenden nicht-modifizierenden Datenbanktypbefehls umfasst, dass nur eine Primärschlüssel-ID und eine Version von Daten, die durch den Datenbankbetriebsbefehl bearbeitet werden, als Ausführungsergebnis aufgezeichnet werden.

3. Verfahren nach Anspruch 1 oder Anspruch 2, ferner umfassend das Konfigurieren der Datenbank für die "Read Committed"-Isolationsebene, bevor die Zieltransaktion von dem Anwendungsserver ausgeführt wird.

4. Datenbankbetriebseinrichtung (30), umfassend:
ein Erfassungsmodul (51, 61), das dafür ausgelegt ist, Datenbankbetriebsbefehle in einer Zieltransaktion, die von einem Anwendungsserver (10) ausgeführt wird, sequenziell zu erhalten, wenn der Anwendungsserver die Zieltransaktion ausführt, wobei die Datenbankbetriebsbefehle an ein Datenbanksystem (20) gerichtet sind, das auf "Read Committed"-Isolationsebene betrieben wird;
ein Ausführungsmodul (52, 62), das hierfür ausgelegt ist:
in Reaktion darauf, dass das Erfassungsmodul einen nicht-modifizierenden und nicht-sperrenden Datenbanktypbefehl erhält, Ausführen des Befehls in dem Datenbanksystem und Rückgabe des Ausführungsergebnisses an den Anwendungsserver, um es dem Anwendungsserver zu erlauben, einen nächsten Datenbankbetriebsbefehl zu bestimmen, der in der Zieltransaktion ausgeführt werden muss;
in Reaktion darauf, dass das Erfassungsmodul einen sperrenden nicht-modifizierenden Datenbanktypbefehls erhält, Ausführen des erhaltenen Datenbankbetriebsbefehls in dem Datenbanksystem, Speichern des erhaltenen Datenbankbetriebsbefehls und des Ausführungsergebnisses in einem lokalen Speicher und Senden des Ausführungsergebnisses an den Anwendungsserver, um es dem Anwendungsserver zu erlauben, einen nächsten Datenbankbetriebsbefehl zu bestimmen, der in der Zieltransaktion ausgeführt werden muss;
in Reaktion darauf, dass das Erfassungsmodul einen modifizierenden Datenbanktypbefehl erhält, Aufteilen des erhaltenen Datenbankbetriebsbefehls in einen Lesebefehl und einen Schreibbefehl, Ausführen des Lesebefehls in dem Datenbanksystem, um einen Datensatz zu erhalten, Speichern des Datensatzes in dem lokalen Speicher, Anwenden des Schreibbefehls in dem lokalen Speicher, um den gelesenen Datensatz zu modifizieren, Rückgabe des modifizierten Datensatzes an den Anwendungsserver, um es dem Anwendungsserver zu erlauben, einen nächsten Datenbankbetriebsbefehl zu bestimmen, der in der Zieltransaktion ausgeführt werden muss;
und
ein Steuerungsausführungsmodul (53, 63), das hierfür ausgelegt ist:
in Reaktion auf das Erhalten eines Transaktionsübergabebefehls, Senden der lokal aufgezeichneten Datenbankbetriebsbefehle zur Ausführung in dem Datenbanksystem;
falls das empfangene Ausführungsergebnis mit dem lokal aufgezeichneten Ausführungsergebnis identisch ist,
Senden des Transaktionsübergabebefehls an das Datenbanksystem, um es der Datenbank zu erlauben, die Zieltransaktion zu übergeben; und
falls das empfangene Ausführungsergebnis von dem lokal aufgezeichneten Ausführungsergebnis verschieden ist, Rücksetzen der Zieltransaktion und Senden eines Transaktionsrücksetzbefehls an das Datenbanksystem.

5. Einrichtung nach Anspruch 4, wobei das Ausführungsmodul (52, 62) dafür ausgelegt ist, nur eine Primärschlüssel-ID und eine Version von Daten, die durch den Datenbankbetriebsbefehl bearbeitet werden, als Ausführungsergebnis zu speichern, wenn der Datenbankbetriebsbefehl ein sperrender nicht-modifizierenden Datenbanktypbefehl ist.

6. Einrichtung nach Anspruch 4 oder Anspruch 5, ferner umfassend ein Konfigurationsmodul, das dafür ausgelegt ist, die Datenbank für die "Read Committed"-Isolationsebene zu konfigurieren, bevor die Zieltransaktion von dem Anwendungsserver ausgeführt wird.

7. Ein oder mehrere computerlesbare Medien, die ausführbare Anwendungen speichern, die, wenn sie von einem oder mehreren Prozessoren einer Datenbankbetriebseinrichtung (30) ausgeführt werden, die ein oder mehreren Prozessoren veranlassen, Aktionen durchzuführen, umfassend:
sequenzielles Erhalten von Datenbankbetriebsbefehlen in einer Zieltransaktion, die von einem Anwendungsserver (10) ausgeführt wird, sobald der Anwendungsserver die Zieltransaktion ausführt, wobei die Datenbankbetriebsbefehle an ein Datenbanksystem (20) gerichtet sind, das auf "Read Committed"-Isolationsebene betrieben wird;
in Reaktion auf das Erhalten eines nicht-modifizierenden und nicht-sperrenden Datenbanktypbefehls, Ausführen des Befehls in dem Datenbanksystem und Rückgabe des Ausführungsergebnisses an den Anwendungsserver, um es dem Anwendungsserver zu erlauben, einen nächsten Datenbankbetriebsbefehl zu bestimmen, der in der Zieltransaktion ausgeführt werden muss;
in Reaktion auf das Erhalten eines sperrenden nicht-modifizierenden Datenbanktypbefehls, Ausführen des erhaltenen Datenbankbetriebsbefehls in dem Datenbanksystem, Speichern des erhaltenen Datenbankbetriebsbefehls und des Ausführungsergebnisses in einem lokalen Speicher und Senden des Ausführungsergebnisses an den Anwendungsserver, um es dem Anwendungsserver zu erlauben, einen nächsten Datenbankbetriebsbefehl zu bestimmen, der in der Zieltransaktion ausgeführt werden muss;
in Reaktion auf das Erhalten eines modifizierenden Datenbanktypbefehls, Aufteilen des erhaltenen Datenbankbetriebsbefehls in einen Lesebefehl und einen Schreibbefehl, Ausführen des Lesebefehls in dem Datenbanksystem, um einen Datensatz zu erhalten, Speichern des Datensatzes in dem lokalen Speicher, Anwenden des Schreibbefehls in dem lokalen Speicher, um den gelesenen Datensatz zu modifizieren, Rückgabe des modifizierten Datensatzes an den Anwendungsserver, um es dem Anwendungsserver zu erlauben, einen nächsten Datenbankbetriebsbefehl zu bestimmen, der in der Zieltransaktion ausgeführt werden muss;
in Reaktion auf das Erhalten eines Transaktionsübergabebefehls, Senden der lokal aufgezeichneten Datenbankbetriebsbefehle zur Ausführung in dem Datenbanksystem;
falls das empfangene Ausführungsergebnis mit dem lokal aufgezeichneten Ausführungsergebnis identisch ist, Senden des Transaktionsübergabebefehls an das Datenbanksystem, um es der Datenbank zu erlauben, die Zieltransaktion zu übergeben; und
falls das empfangene Ausführungsergebnis von dem lokal aufgezeichneten Ausführungsergebnis verschieden ist, Rücksetzen der Zieltransaktion und Senden eines Transaktionsrücksetzbefehls an das Datenbanksystem.

## Revendications

1. Procédé d'exploitation de base de données mis en œuvre dans un appareil d'exploitation de base de données (30) comprenant les étapes suivantes :
obtenir de manière séquentielle des commandes opérationnelles de base de données dans une transaction cible exécutée par un serveur d'application (10) à mesure que le serveur d'application exécute la transaction cible, les commandes opérationnelles de base de données étant adressées à un système de base de données (20) fonctionnant à un niveau d'isolation Read Committed ;
en réponse à l'obtention d'une commande de type base de données non modificatrice et non bloquante, exécuter la commande dans le système de base de données et renvoyer le résultat de l'exécution au serveur d'application pour permettre au serveur d'application de déterminer une prochaine commande opérationnelle de base de données qui doit être exécutée dans la transaction cible ;
en réponse à l'obtention d'une commande de type de base de données non modificatrice et bloquante, exécuter la commande opérationnelle de base de données obtenue dans le système de base de données, stocker la commande opérationnelle de base de données obtenue et le résultat de l'exécution dans une mémoire locale, et envoyer le résultat de l'exécution au serveur d'application pour permettre au serveur d'application de déterminer une prochaine commande opérationnelle de base de données qui doit être exécutée dans la transaction cible ;
en réponse à l'obtention d'une commande de type de base de données modificatrice, diviser la commande opérationnelle de base de données obtenue en une commande de lecture et une commande d'écriture, exécuter la commande de lecture dans le système de base de données pour obtenir un ensemble de données, stocker l'ensemble de données dans la mémoire locale, appliquer la commande d'écriture dans la mémoire locale pour modifier l'ensemble de données lu, renvoyer l'ensemble de données modifié au serveur d'application pour permettre au serveur d'application de déterminer une prochaine commande opérationnelle de base de données qui doit être exécutée dans la transaction cible ;
en réponse à l'obtention d'une commande Commit de validation de transaction, envoyer les commandes opérationnelles de base de données enregistrées localement pour exécution dans le système de base de données ;
si le résultat d'exécution reçu est identique au résultat d'exécution enregistré localement, envoyer la commande de validation de la transaction au système de base de données pour permettre à la base de données de valider la transaction cible ; et
si le résultat d'exécution reçu est différent du résultat d'exécution enregistré localement, annuler la transaction cible et envoyer une commande d'annulation de transaction au système de base de données.

2. Procédé selon la revendication 1, dans lequel l'enregistrement du résultat d'exécution en réponse à l'obtention d'une commande de type de base de données non modificatrice bloquante comprend l'enregistrement d'un ID de clé primaire uniquement et d'une version de données qui est manipulée par la commande opérationnelle de base de données en tant que résultat d'exécution.

3. Procédé selon la revendication 1 ou la revendication 2, comprenant en outre de configurer la base de données dans le niveau d'isolation Read Committed avant que la transaction cible ne soit exécutée par le serveur d'application.

4. Appareil d'exploitation de base de données (30) comprenant :
un module d'acquisition (51, 61) configuré pour obtenir de manière séquentielle des commandes opérationnelles de base de données dans une transaction cible exécutée par un serveur d'application (10) à mesure que le serveur d'application exécute la transaction cible, les commandes opérationnelles de base de données étant dirigées vers un système de base de données (20) fonctionnant à un niveau d'isolation Read Committed ;
un module d'exécution (52, 62) configuré pour :
en réponse à l'obtention, par le module d'acquisition, d'une commande de type base de données non modificatrice et non bloquante, exécuter la commande dans le système de base de données et renvoyer le résultat de l'exécution au serveur d'application pour permettre au serveur d'application de déterminer une prochaine commande opérationnelle de base de données qui doit être exécutée dans la transaction cible ;
en réponse à l'obtention, par le module d'acquisition, d'une commande de type de base de données non modificatrice et bloquante, exécuter la commande opérationnelle de base de données obtenue dans le système de base de données, stocker la commande opérationnelle de base de données obtenue et le résultat de l'exécution dans une mémoire locale, et envoyer le résultat de l'exécution au serveur d'application pour permettre au serveur d'application de déterminer une prochaine commande opérationnelle de base de données qui doit être exécutée dans la transaction cible ;
en réponse à l'obtention, par le module d'acquisition, d'une commande de type de base de données modificatrice, diviser la commande opérationnelle de base de données obtenue en une commande de lecture et une commande d'écriture, exécuter la commande de lecture dans le système de base de données pour obtenir un ensemble de données, stocker l'ensemble de données dans la mémoire locale, appliquer la commande d'écriture dans la mémoire locale pour modifier l'ensemble de données lu, renvoyer l'ensemble de données modifié au serveur d'application pour permettre au serveur d'application de déterminer une prochaine commande opérationnelle de base de données qui doit être exécutée dans la transaction cible ;
et
un module d'exécution de contrôle (53, 63) configuré pour
en réponse à l'obtention d'une commande de validation de transaction, envoyer les commandes opérationnelles de base de données enregistrées localement pour qu'elles soient exécutées dans le système de base de données ;
si le résultat d'exécution reçu est identique au résultat d'exécution enregistré localement, envoyer la commande de validation de la transaction au système de base de données pour permettre à la base de données de valider la transaction cible ; et
si le résultat d'exécution reçu est différent du résultat d'exécution enregistré localement, annuler la transaction cible et envoyer une commande d'annulation de transaction au système de base de données.

5. Appareil selon la revendication 4, dans lequel le module d'exécution (52, 62) est configuré pour stocker uniquement un identifiant de clé primaire et une version des données manipulées par la commande opérationnelle de la base de données en tant que résultat d'exécution lorsque la commande opérationnelle de la base de données est une commande de type de base de données non modificatrice bloquante.

6. Appareil selon la revendication 4 ou la revendication 5, comprenant en outre un module de configuration configuré pour configurer la base de données dans le niveau d'isolation Read Committed avant que la transaction cible ne soit exécutée par le serveur d'application.

7. Un ou plusieurs supports lisibles par ordinateur stockant des instructions exécutables qui, lorsqu'elles sont exécutées par un ou plusieurs processeurs d'un appareil d'exploitation de base de données (30), amènent les un ou plusieurs processeurs à exécuter les actions suivantes :
obtenir de manière séquentielle des commandes opérationnelles de base de données dans une transaction cible exécutée par un serveur d'application (10) à mesure que le serveur d'application exécute la transaction cible, où les commandes opérationnelles de base de données sont dirigées vers un système de base de données (20) fonctionnant à un niveau d'isolation Read Committed ;
en réponse à l'obtention d'une commande de type de base de données non modificatrice et non bloquante, exécuter la commande dans le système de base de données et renvoyer le résultat de l'exécution au serveur d'application pour permettre au serveur d'application de déterminer une prochaine commande opérationnelle de base de données qui doit être exécutée dans la transaction cible ;
en réponse à l'obtention d'une commande de type de base de données non modificatrice et bloquante, exécuter la commande opérationnelle de base de données obtenue dans le système de base de données, stocker la commande opérationnelle de base de données obtenue et le résultat de l'exécution dans une mémoire locale, et envoyer le résultat de l'exécution au serveur d'application pour permettre au serveur d'application de déterminer une prochaine commande opérationnelle de base de données qui doit être exécutée dans la transaction cible ;
en réponse à l'obtention d'une commande de type de base de données modificatrice, diviser la commande opérationnelle de base de données obtenue en une commande de lecture et une commande d'écriture, exécuter la commande de lecture dans le système de base de données pour obtenir un ensemble de données, stocker l'ensemble de données dans la mémoire locale, appliquer la commande d'écriture dans la mémoire locale pour modifier l'ensemble de données lu, renvoyer l'ensemble de données modifié au serveur d'application pour permettre au serveur d'application de déterminer une prochaine commande opérationnelle de base de données qui doit être exécutée dans la transaction cible ;
en réponse à l'obtention d'une commande de validation de transaction, envoyer des commandes opérationnelles de base de données enregistrées localement pour exécution dans le système de base de données ;
si le résultat d'exécution reçu est identique au résultat d'exécution enregistré localement, envoyer la commande de validation de la transaction au système de base de données pour permettre à la base de données de valider la transaction cible ; et
si le résultat d'exécution reçu est différent du résultat d'exécution enregistré localement, annuler la transaction cible et envoyer une commande d'annulation de transaction au système de base de données.
